# FASCICULE DE BREVET EUROPEEN

(11) **EP 0 913 597 B1**
(45) Date de publication et mention de la délivrance du brevet: **17.12.2003**
(21) Numéro de dépôt: 98402502.3
(22) Date de dépôt: 08.10.1998
(51) Int. Cl.: F16D 23/14, F16D 23/12

(54) **Dispositif de commande de butée de débrayage muni de moyens d'amortissement des vibrations**
Kupplungsausrücklager mit Schwingungsdämpfungseinrichtung
Clutch release mecanism with vibration damping means

(30) Priorité: 28.10.1997 FR 9713507
(43) Date de publication de la demande: 06.05.1999
(73) Titulaire: SKF FRANCE, F-92140 Clamart (FR)
(72) Inventeur: Ponson, Frédéric, 37230 Luynes (FR); Collignon, Bertrand, Mapo-ku, Seoul 121-220 (KR); Houdayer, Christophe, 37000 Tours (FR); Arnault, Benoît, 37100 Tours (FR)
(74) Mandataire: Casalonga, Axel

(56) Documents cités:
- EP-A- 0 474 546
- DE-C- 3 418 772
- FR-A- 2 479 378
- FR-A- 2 514 447
- FR-A- 2 536 482
- FR-A- 2 582 364

## Description

La présente invention concerne le domaine des dispositifs de commande de butée de débrayage, en particulier pour véhicules automobiles.

De tels dispositifs de commande comportent généralement une butée de débrayage et un organe de commande apte à déplacer axialement ladite butée le long d'un tube-guide solidaire du carter de boîte de vitesses, en exerçant sur un organe de manoeuvre une poussée axiale qui sera transmise au diaphragme du mécanisme d'embrayage par l'intermédiaire du roulement de butée qui vient en appui axial sur ledit diaphragme.

La butée de débrayage comporte elle-même :
- un roulement se composant d'une bague tournane et d'une bague fixe entre lesquelles sont disposées des billes régulièrement réparties dans le sens circonférentiel au moyen d'une cage, la bague tournante étant munie d'une surface d'attaque destinée à venir en contact avec l'extrémité des doigts composant le diaphragme de l'embrayage;
- un élément de manoeuvre supportant le roulement et qui, sous l'action de l'organe de commande mécanique, électrique ou hydraulique, vient déplacer axialement le roulement de butée sur un tube-guide contre le diaphragme de l'embrayage;
- des moyens d'auto-alignement, disposés entre la bague fixe et l'élément de manoeuvre, lesdits moyens assurant généralement la liaison entre le roulement de butée et l'élément de manoeuvre tout en autorisant un certain déplacement radial du roulement de butée par rapport à l'élément de manoeuvre, ce qui permet au roulement de s'auto-aligner sur le diaphragme d'embrayage lorsque les axes de rotation de ces deux éléments ne sont pas parfaitement alignés au départ;
- un organe de commande apte à exercer sur l'organe de manoeuvre une poussée axiale, et se présentant sous la forme d'une fourchette à deux doigts ou à lumière centrale.

Dans les butées de débrayage conventionnelles, l'organe de commande réalisé généralement en tôle d'acier emboutie, vient porter directement sur une surface d'appui de la douille de guidage formant l'élément de manoeuvre, ladite surface étant généralement métallique.

Une partie importante des vibrations et des bruits générés principalement par le moteur et la boîte de vitesses, est ainsi transmise à l'habitacle du véhicule via le diaphragme d'embrayage, la butée et l'organe de commande, par exemple la fourchette de débrayage.

Le document FR-A-2 536 482 (SKF) propose un dispositif susceptible de filtrer les vibrations entre la butée et la fourchette de commande. Ce système donne toute satisfaction en position embrayée, c'est-à-dire pendant la plus grande partie du temps de fonctionnement du véhicule. En revanche, en position débrayée, lorsque le conducteur actionne la fourchette de débrayage par l'intermédiaire de la pédale, la plaque d'appui métallique vient directement en contact avec la collerette radiale de la douille de guidage qui est réalisée en matière plastique chargée de fibres de verre. Pendant la durée de la manoeuvre, les coussinets en caoutchouc n'isolent pas complètement la douille de guidage de la plaque d'appui et de la fourchette, et il peut se produire une transmission partielle des vibrations. Par ailleurs, ce système n'est pas adapté au cas où la collerette radiale de la douille de guidage est métallique, ce que requièrent certaines applications pour des raisons de résistance mécanique. De plus, un tel système est relativement encombrant dans le sens axial.
Le document EP A 0 474 546 concerne une butée d'embrayage dans laquelle des sabots de contact sont interposés entre les doigts de l'organe de commande et une plaque d'appui métallique de la collerette radiale. Ces sabots ont pour but de limiter l'usure des surfaces de la plaque d'appui métallique et des doigts d'extrémité de l'organe de commande tout en éliminant la transmission des vibrations. Les doigts de fourchette n'entrent en contact qu'avec les sabots. Du côté opposé, les sabots frottent sur la plaque d'appui métallique recouvrant la collerette radiale de l'élément de manoeuvre.

Les sabots se maintiennent entre l'organe de commande et la plaque d'usure en raison de l'effort exercé en permanence par l'organe de commande sur la plaque d'appui. Ainsi les sabots peuvent effectuer par rapport à la plaque d'appui les mouvements naturels de glissement relatifs que leur impriment les doigts d'extrémité de l'organe de commande lors de la manoeuvre de la butée d'embrayage tandis que l'organe de commande peut pivoter autour d'un point de pivotement.

La présente invention a pour but de remédier aux inconvénients des dispositifs précités en proposant une commande de butée d'embrayage pourvue de moyens pour filtrer en permanence les vibrations.

L'invention a également pour objet de proposer un filtrage des vibrations adaptable aux collerettes métalliques d'éléments de manoeuvre.

Le dispositif de commande de butée d'embrayage, selon l'invention, est du type comprenant un tube-guide, une butée de débrayage pourvue d'un élément de manoeuvre et d'un roulement et montée coulissante sur une partie tubulaire du tube-guide, et un organe de commande capable d'agir sur la butée de débrayage. Le dispositif de commande comprend des moyens d'amortissement permanent des vibrations mécaniques, disposés entre la butée de débrayage et l'organe de commande, dans leur zone de contact mutuel. Les moyens d'amortissement permanent sont formés par un revêtement adhérisé sur un support, le support étant constitué, soit par la butée de débrayage, soit par l'organe de commande.

Les vibrations en provenance du moteur et de la boîte de vitesses sont ainsi filtrées de façon permanente, ce qui évite leur propagation dans les autres organes du véhicule et en particulier dans l'habitacle.

Dans un mode de réalisation de l'invention, les moyens d'amortissement des vibrations sont disposés sur l'élément de manoeuvre. Par exemple, sur une plaque d'appui métallique de l'élément de manoeuvre, ou sur une zone en matériau synthétique de l'élément de manoeuvre, ou encore sur des agrafes rapportées sur l'élément de manoeuvre.

Dans un autre mode de réalisation de l'invention, les moyens d'amortissement des vibrations sont disposés sur une face d'une bague non tournante du roulement de butée, ladite face formant une surface d'appui pour l'organe de commande.

Dans un autre mode de réalisation de l'invention, les moyens d'amortissement des vibrations sont disposés sur l'organe de commande.

Dans un mode de réalisation de l'invention, le dispositif de commande comprend des moyens anti-usure disposés entre la butée de débrayage et l'organe de commande, dans leur zone de contact mutuel.

Dans un mode de réalisation de l'invention, les moyens d'amortissement des vibrations se présentent sous la forme d'un revêtement élastique. Le revêtement élastique peut comprendre une matrice élastique organique et des particules dures de forme quasi-sphérique.

Avantageusement, la matrice élastique est de type élastomère et les particules sont de type céramique non oxydes, le diamètre des particules pouvant être majoritairement compris entre 0,1 et 10 µm.

Un tel revêtement élastique possède à la fois des propriétés d'amortissement vibratoire et des caractéristiques anti-usure. Les particules submicroniques peuvent être des poudres de carbure, nitrure ou carbonitrure de métaux réfractaires choisis parmi le titane, le zirconium, le hafnium, le tantale, le niobium, le tungstène, le molybdène, le bore et le silicium ou un mélange de ces composés de métaux.

Pour obtenir une distribution convenablement répartie des particules submicroniques dans la matrice élastique, on peut plonger lesdites particules submicroniques avant leur introduction dans la matrice dans un dispersant organique macromoléculaire destiné à réduire la tension interfaciale entre la matrice organique et les particules submicroniques qui sont alors insérées dans la matrice et englobées à des distances importantes, à l'échelle moléculaire, les unes des autres. La nature organique de la matrice et du dispersant assure l'accord du système de polarité de ces deux composants, et leur permet la formation de liaisons non covalentes.

On dispose ainsi d'une filtration permanente des vibrations, à l'état débrayé ou à l'état embrayé, sans usure prématurée des surfaces d'appui en contact. La matrice a un effet amortisseur qui filtre les vibrations et les particules submicroniques de dureté élevée et de forme quasi-sphérique évitent que le revêtement ne se dégrade par frottement. L'application d'un tel revêtement est simple à effectuer par des procédés classiques d'adhérisation d'un élastomère sur un support solide. Elle peut se faire, par exemple, par projection ou dépôt du revêtement composite sur le support préalablement préparé et recouvert éventuellement d'un revêtement primaire, époxy par exemple. On prévoira en général un revêtement d'une épaisseur comprise entre 1 et 2 mm, de façon à couvrir largement le nombre de cycles de débrayage correspondant à la durée de vie normale d'un véhicule automobile.

La présente invention sera mieux comprise et d'autres avantages apparaîtront à l'étude de la description détaillée de quelques modes de réalisation décrits à titre d'exemples nullement limitatifs et illustrés par les dessins annexés, sur lesquels :
la figure 1 est une vue en coupe axiale d'un dispositif de commande de butée de débrayage conforme à l'invention;
la figure 2 est une vue arrière du dispositif de la figure 1;
la figure 3 est une vue en demi-coupe axiale d'un dispositif selon un autre mode de réalisation de l'invention;
la figure 4 est une vue arrière en élévation du dispositif de la figure 3;
la figure 5 est une vue en demi-coupe axiale d'un dispositif selon un autre mode de réalisation de l'invention;
la figure 6 est une vue arrière en élévation du dispositif de la figure 5;
la figure 7 est une vue en demi-coupe axiale d'un dispositif selon un autre mode de réalisation de l'invention;
la figure 8 est une vue arrière en élévation du dispositif de la figure 7;
la figure 9 est une vue en demi-coupe axiale d'un dispositif selon un autre mode de réalisation de l'invention;
la figure 10 est une vue arrière en élévation du dispositif de la figure 9;
la figure 11 est une vue de face en élévation d'une fourchette à deux doigts conforme à l'invention;
la figure 12 est une vue en coupe selon XII-XII de la figure 11;
la figure 13 est une vue de face en élévation d'une fourchette à lumière centrale conforme à l'invention.

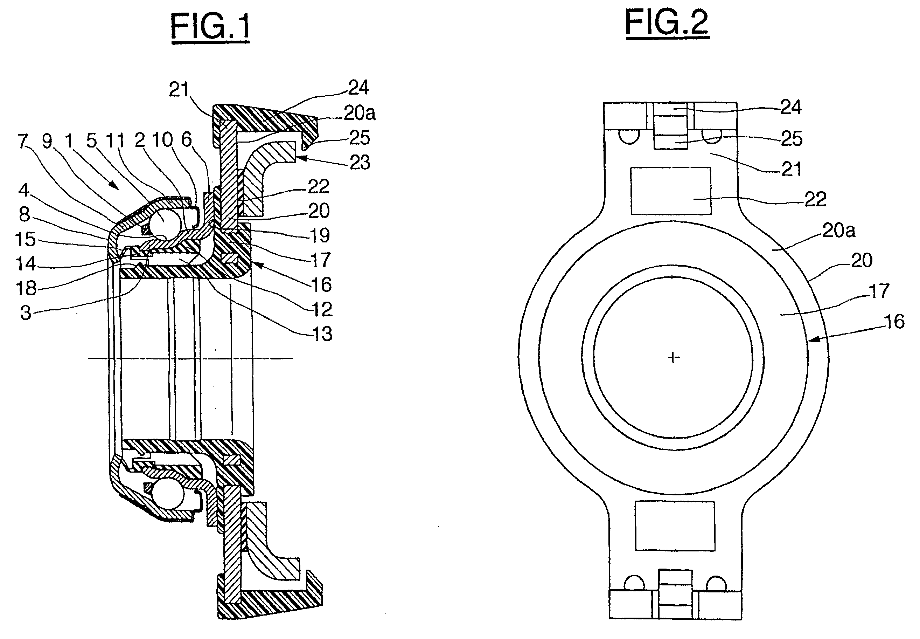

Comme on peut le voir sur les figures 1 et 2, la butée de débrayage conforme à l'invention comprend un palier à roulement référencé 1 dans son ensemble, muni d'une bague intérieure de roulement 2 à paroi mince réalisée par emboutissage d'une tôle ou d'un tube, présentant une partie tubulaire 3 et un chemin de roulement torique 4 pour une rangée d'éléments roulants 5, par exemple des billes. La partie tubulaire 3 se prolonge extérieurement par une portion radiale 6. Le roulement à billes 1 se complète par une bague extérieure 7 également à paroi mince réalisée par emboutissage d'une tôle ou d'un tube. La bague extérieure 7 comporte une portion torique 8 qui peut venir en contact ou être maintenue en contact avec la surface d'un diaphragme non représenté sur la figure lors d'un déplacement longitudinal de l'ensemble de la butée par rapport au tube-guide non représenté. Les éléments roulants 5 sont maintenus par une cage 9, le roulement 1 étant protégé par un flasque 10 fixé sur une extension cylindrique 11 dirigée vers la portion radiale 6 de la bague intérieure 2.

Un manchon en matière élastique 12, par exemple en élastomère ou en caoutchouc naturel, est disposé à l'intérieur de la partie tubulaire 3 de la bague intérieure 2. Le manchon élastique 12 comprend une pluralité de nervures 13 parallèles à l'axe de la butée dirigé vers l'intérieur. Les nervures 13 sont légèrement inclinées par rapport à la direction radiale et présentent de préférence un profil allant en s'amincissant depuis le manchon 12 vers leurs bords libres. Le manchon 12 peut être fixé par collage, surmoulage ou encliquetage à l'intérieur de la bague 2. Une prolongation axiale 14 du manchon 12 s'étend en direction de la portion torique 8 de la bague extérieure 7 et présente une lèvre annulaire 15 qui protège le roulement 1 en réduisant les possibilités d'entrée de matières étrangères dans la zone des éléments roulants 5.

Le bord libre des nervures 13 entre en contact avec une portion de la surface externe cylindrique d'un élément de manoeuvre rigide 16 et réalisée par exemple en matière plastique et dont l'alésage est en contact de glissement avec la surface externe du tube-guide assurant le guidage du déplacement longitudinal de la butée lors de chaque opération de débrayage. Un rebord 18 permet le maintien du roulement 1 muni du manchon élastique 12 autour de l'élément de manoeuvre 16 après encliquetage des nervures 13 par déplacement du roulement 1 muni de son manchon 12 de la gauche vers la droite sur la figure 1 lors du montage.

L'élément de manoeuvre 16 comprend une collerette radiale 17. La portion radiale 6 de la bague intérieure 2 se trouve en contact de frottement avec la face 19 de la collerette radiale 17 de l'élément de manoeuvre 16. De cette manière, le roulement 1 peut s'autocentrer si nécessaire par rapport au diaphragme en se déplaçant radialement par rapport à l'élément de manoeuvre 16 grâce à la déformation des nervures 13 du manchon élastique 12. Ce déplacement se fait strictement dans un plan radial grâce au contact de frottement entre la portion radiale 6 et la face 19 de la collerette 17.

Une plaque d'appui 20 présentant des caractéristiques anti-usure appropriées, et réalisée de préférence en métal, entoure la collerette radiale 17 de l'élément de manoeuvre 16. La plaque d'appui 20 comporte en outre deux prolongations radiales 21 diamétralement opposées.

La face 20a de la plaque d'appui 20 opposée au roulement 1, est partiellement recouverte d'un revêtement 22 possédant à la fois des caractéristiques d'amortissement vibratoire et des caractéristiques anti-usure. La fourchette 23 est prévue pour entrer en contact avec le revêtement 22 uniquement, sans entrer en contact avec la plaque d'appui 20 de l'élément de manoeuvre 16. Un organe élastique 24 de retenue axiale de la fourchette 23 est monté par exemple par surmoulage sur l'extrémité libre des prolongations axiales 21 de la plaque d'appui 20. L'organe de retenue 24 s'étend à partir de la plaque d'appui 20 en direction de la fourchette 23 et comprend des crochets 25 prévus pour assurer la solidarisation axiale relative de la fourchette 23 avec l'élément de manoeuvre 16, en particulier lors des opérations de montage sur véhicule.

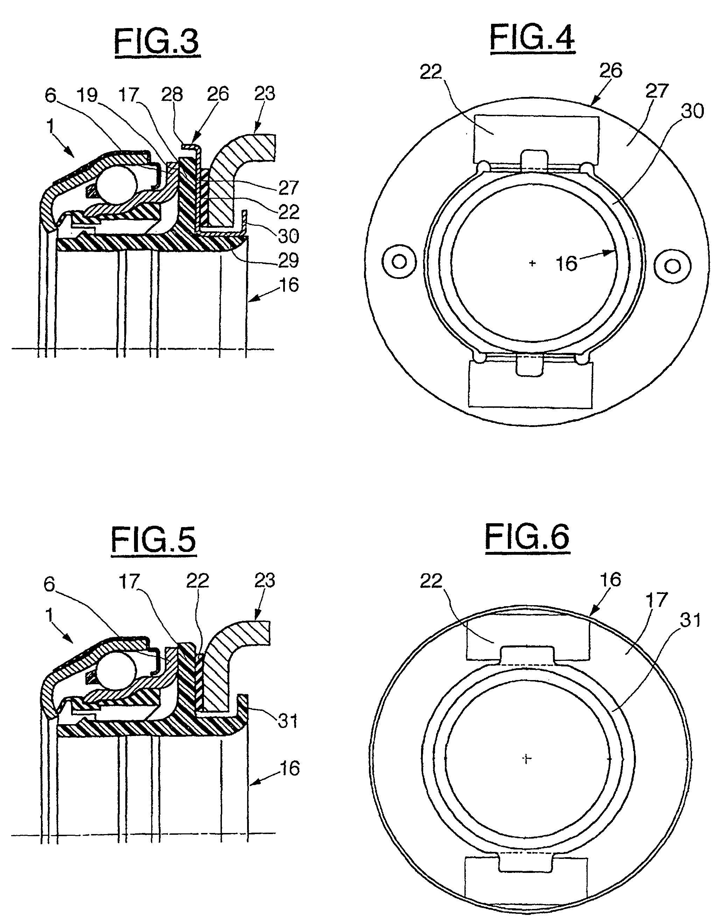

Les figures 3 et 4 illustrent un mode de réalisation semblable au précédent, à ceci près que le revêtement 22 est disposé sur une plaque d'appui métallique mince 26 rapportée sur un élément de manoeuvre en matière plastique. La plaque d'appui 26 comprend une portion radiale 27 recevant le revêtement 22, un rebord cylindrique de rigidification 28 disposé à la périphérie de la portion radiale 27, une portion cylindrique 29 disposée sur le bord interne de la portion radiale 27 et s'étendant axialement à l'opposé du roulement 1, et un rebord radial 30 s'étendant vers l'extérieur à partir de la portion cylindrique 29 et de dimension suffisante pour assurer la retenue axiale de la fourchette 23 par rapport à l'élément de manoeuvre 16.

Le mode de réalisation illustré sur les figures 5 et 6 est semblable au précédent, à ceci près que le revêtement anti-usure 22 est directement appliqué sur la collerette radiale 17 de l'élément de manoeuvre 16 en l'absence de plaque d'appui. La retenue axiale de la fourchette 23 par rapport à l'élément de manoeuvre 16 est assurée par un rebord radial 31 monobloc avec l'élément de manoeuvre 16 et s'étendant à partir de l'extrémité libre de sa portion cylindrique.

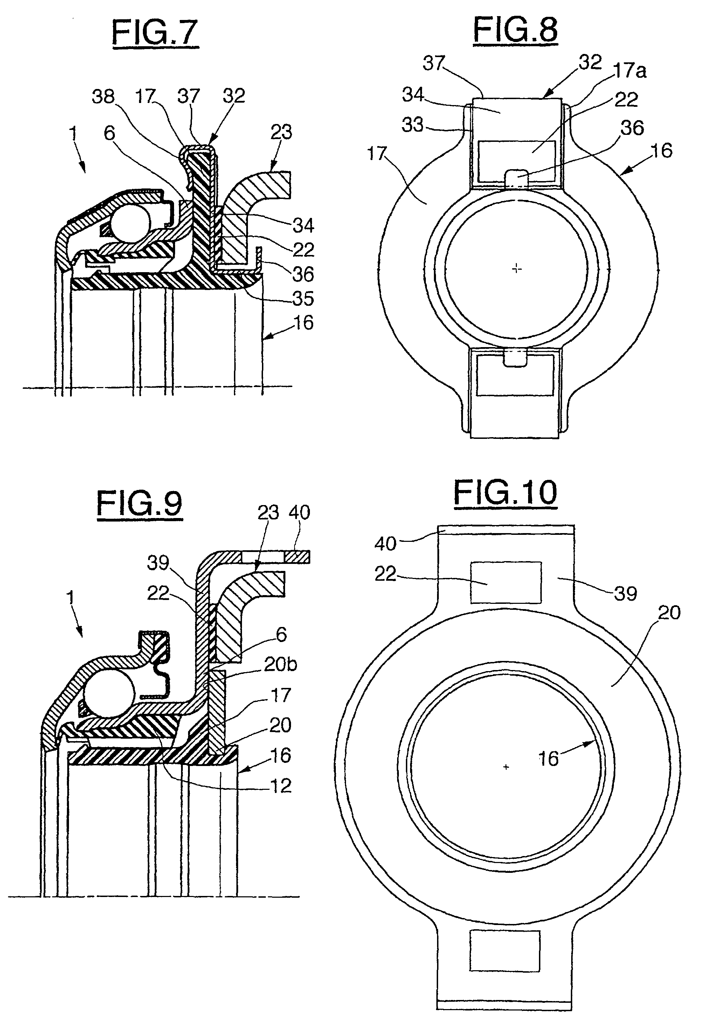

Le mode de réalisation illustré sur les figures 7 et 8 est semblable à celui des figures 3 et 4, à ceci près que la plaque d'appui est remplacée par deux agrafes 32 montées chacune sur une prolongation radiale 17a de la collerette radiale 17 de l'élément de manoeuvre 16. La face de la collerette radiale 17 opposée au roulement 1 est pourvue d'empreintes 33 destinées à recevoir les agrafes 32. Chaque agrafe 32 comprend une portion radiale 34 disposée dans une empreinte 33, une portion axiale 35 s'étendant à l'opposé du roulement 1 à partir du bord intérieur de la portion radiale 34 et se prolongeant par un rebord radial 36 assurant la retenue axiale de la fourchette 23 par rapport à l'élément de manoeuvre 16, une portion cylindrique 37 s'étendant en direction du roulement 1 à partir de la périphérie de la portion radiale 34 et se prolongeant par une patte élastique 38 s'étendant radialement vers l'intérieur et entourant la prolongation radiale 17a de la collerette radiale 17 de l'élément de manoeuvre 16. On prévoit une surépaisseur locale sur cette prolongation radiale 17a de façon à ce que les pattes élastiques 38 assurent une solidarisation efficace de l'agrafe 32 sur l'élément de manoeuvre 16.

Dans le mode de réalisation illustré sur les figures 9 et 10, la portion radiale 6 de la bague intérieure 2 s'étend largement vers l'extérieur avec deux prolongations radiales 39 diamétralement opposées et supportant chacune une portion axiale 40 dirigée à l'opposé du roulement 1. La butée peut coulisser sur le tube-guide par l'intermédiaire d'une douille de guidage 16 sur laquelle la butée est montée par l'intermédiaire du manchon élastique 12. La douille de guidage 16 est pourvue d'une collerette radiale 17 de dimension réduite et est solidaire d'une plaque de guidage radiale 20 en forme de disque servant à maintenir l'orthogonalité entre la partie tubulaire de la douille de guidage et la portion radiale 6 de la bague intérieure 2. La portion radiale 6 de la bague intérieure 2 vient directement en contact axial contre la face 20b de la plaque de guidage radiale 20 disposée du côté du roulement 1. Les prolongations radiales 39 supportent sur leurs faces opposées au roulement 1 le revêtement 22 sur lequel viennent porter les doigts de la fourchette 23.

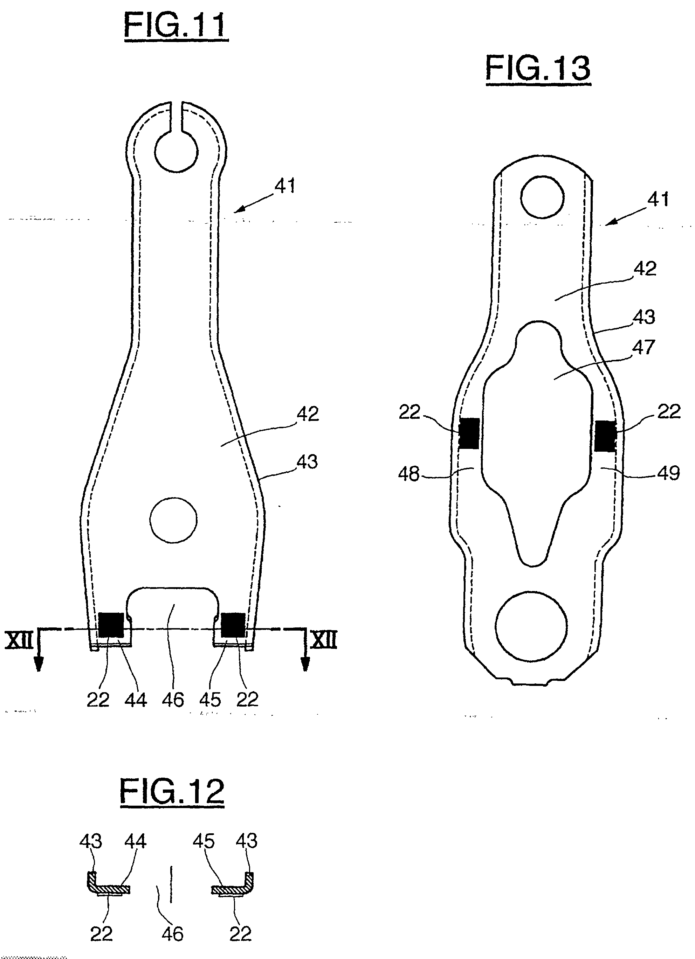

Dans le mode de réalisation illustré sur les figures 11 et 12, la fourchette de débrayage 41 est réalisée en tôle métallique et comprend une partie plane 42 entourée d'un rebord 43. La fourchette 41 est pourvue de deux doigts 44 et 45 séparés par un creux 46 dans lequel fait saillie, après montage, une douille de guidage non représentée. Le revêtement 22 est disposé sur les doigts 44 et 45 aux emplacements prévus pour le contact avec un élément d'une butée de débrayage, par exemple une plaque d'appui de l'élément de manoeuvre, une zone en matériau synthétique de l'élément de manoeuvre, ou une bague intérieure de roulement de butée.

Le mode de réalisation illustré sur la figure 13 est similaire au précédent, à ceci près que la fourchette 43 est du type à lumière centrale 47, la lumière centrale 47 étant destinée à recevoir un tube-guide et une douille de guidage non représentés. La fourchette 41 comprend deux branches 48 et 49 entourant la lumière 47 et sur une face desquelles sont disposées deux portions de revêtement 22 destinées à entrer en contact avec des surfaces de réception diamétralement opposées prévues à cet effet sur une butée de débrayage.

Grâce à l'invention, on dispose d'une butée de débrayage capable de filtrer les vibrations en provenance du moteur et de la boîte de vitesses quel que soit l'état de l'embrayage, embrayé ou débrayé, grâce à un revêtement élastique pourvu de particules dures limitant son usure et garantissant une durée de vie du même ordre que celle d'un véhicule automobile. On améliore ainsi le confort du véhicule en réduisant la transmission des vibrations à d'autres éléments tels que l'habitacle.

## Revendications

1. Dispositif de commande de butée de débrayage du type comprenant un tube-guide, une butée de débrayage pourvue d'un élément de manoeuvre (16) et d'un roulement (1) et montée coulissante sur une partie tubulaire du tube-guide, et un organe de commande (23) capable d'agir sur la butée de débrayage, et des moyens d'amortissement permanent des vibrations mécaniques, lesdits moyens étant disposés entre la butée de débrayage et l'organe de commande (23), dans leur zone de contact mutuel, l'organe de commande (23) entrant en contact avec les moyens d'amortissement uniquement, **caractérisé par le fait que** les moyens d'amortissement permanent sont formés par un revêtement (22) adhérisé sur un support, le support étant constitué, soit par la butée de débrayage, soit par l'organe de commande (23).

2. Dispositif selon la revendication 1, **caractérisé par le fait que** les moyens d'amortissement des vibrations sont disposés sur l'élément de manoeuvre.

3. Dispositif selon la revendication 2, **caractérisé par le fait que** les moyens d'amortissement des vibrations sont disposés sur une plaque d'appui métallique (20) de l'élément de manoeuvre.

4. Dispositif selon la revendication 2, **caractérisé par le fait que** les moyens d'amortissement des vibrations sont disposés sur une zone (17) en matériau synthétique de l'élément de manoeuvre.

5. Dispositif selon la revendication 2, **caractérisé par le fait que** les moyens d'amortissement des vibrations sont disposés sur des agrafes (32) rapportées sur l'élément de manoeuvre.

6. Dispositif selon la revendication 1, **caractérisé par le fait que** les moyens d'amortissement des vibrations sont disposés sur une face d'une bague non tournante (2) du roulement de butée, ladite face formant une surface d'appui pour l'organe de commande.

7. Dispositif selon la revendication 1, **caractérisé par le fait que** les moyens d'amortissement des vibrations sont disposés sur l'organe de commande.

8. Dispositif selon l'une quelconque des revendications précédentes, **caractérisé par le fait qu'**il comprend des moyens anti-usure disposés entre la butée de débrayage et l'organe de commande, dans leur zone de contact mutuel.

9. Dispositif selon l'une quelconque des revendications précédentes, **caractérisé par le fait que** les moyens d'amortissement des vibrations se présentent sous la forme d'un revêtement élastique (22).

10. Dispositif selon la revendication 9, **caractérisé par le fait que** le revêtement élastique comprend une matrice élastique organique et des particules dures de forme quasi-sphérique.

11. Dispositif selon la revendication 10, **caractérisé par le fait que** la matrice élastique est de type élastomère et que les particules sont de type céramique non oxydes.

12. Dispositif selon la revendication 10 ou 11, **caractérisé par le fait que** le diamètre des particules est majoritairement compris entre 0,1 et 10 microns.

## Patentansprüche

1. Steuervorrichtung für eine Ausrückkupplung umfassend ein Führungsrohr, eine Ausrückkupplung, die mit einem Bedienungselement (16) und einem Wälzlager (1) ausgestattet ist und gleitend auf einem röhrenförmigen Abschnitt des Führungsrohrs montiert ist, sowie ein Steuerorgan, das in der Lage ist, auf die Ausrückkupplung einzuwirken, sowie Mittel zur permanenten Dämpfung von mechanischen Schwingungen, wobei die Mittel zwischen der Ausrückkupplung und dem Steuerorgan (23) in deren gegenseitigen Kontaktbereich angeordnet sind und wobei das Steuerorgan (23) nur mit den Mitteln zur Dämpfung in Kontakt tritt, **dadurch gekennzeichnet, dass** die Mittel zur permanenten Dämpfung durch einen Überzug (22) ausgebildet sind, der auf einem Träger haftet, wobei der Träger entweder aus der Ausrückkupplung oder aus dem Steuerorgan (23) besteht.

2. Vorrichtung nach Anspruch 1, **dadurch gekennzeichnet, dass** die Mittel zur Dämpfung der Schwingungen auf dem Bedienungselement angeordnet sind.

3. Vorrichtung nach Anspruch 2, **dadurch gekennzeichnet, dass** die Mittel zur Dämpfung der Schwingungen auf einer metallischen Stützplatte (20) des Bedienungselements angeordnet sind.

4. Vorrichtung nach Anspruch 2, **dadurch gekennzeichnet, dass** die Mittel zur Dämpfung der Schwingungen auf einem aus Kunststoff bestehenden Bereich (17) des Bedienungselements angeordnet sind.

5. Vorrichtung nach Anspruch 2, **dadurch gekennzeichnet, dass** die Mittel zur Dämpfung der Schwingungen auf Klammem (32) angeordnet sind, die auf dem Bedienungselement angebracht sind.

6. Vorrichtung nach Anspruch 1, **dadurch gekennzeichnet, dass** die Mittel zur Dämpfung der Schwingungen auf einer Seite eines sich nicht drehenden Rings (2) der Ausrückkupplung angeordnet sind, wobei die Seite eine Stützfläche für das Steuerorgan ausbildet.

7. Vorrichtung nach Anspruch 1, **dadurch gekennzeichnet, dass** die Mittel zur Dämpfung der Schwingungen auf dem Steuerorgan angeordnet sind.

8. Vorrichtung nach einem der vorstehenden Ansprüche, **dadurch gekennzeichnet, dass** die Vorrichtung Abnutzungsschutzmittel aufweist, die zwischen der Ausrückkupplung und dem Steuerorgan in deren gegenseitigen Kontaktbereich angebracht sind.

9. Vorrichtung nach einem der vorstehenden Ansprüche, **dadurch gekennzeichnet, dass** die Mittel zur Dämpfung der Schwingungen als elastischer Überzug (22) ausgebildet sind.

10. Vorrichtung nach Anspruch 9, **dadurch gekennzeichnet, dass** der elastische Überzug eine elastische organische Matrix und harte, quasi kugelförmige Teilchen aufweist.

11. Vorrichtung nach Anspruch 10, **dadurch gekennzeichnet, dass** die elastische Matrix vom Typ Elastomer ist und die Teilchen vom nicht-Oxid Keramiktyp sind.

12. Vorrichtung nach Anspruch 10 oder 11, **dadurch gekennzeichnet, dass** der Teilchendurchmesser überwiegend zwischen 0,1 und 10 Mikron liegt.

## Claims

1. Control device of a clutch release bearing comprising a guide rod, a clutch release bearing fitted with an operating device (16) and a bearing (1) and mounted so as to slide on a tubular part of the guide rod, and a control block (23) capable of acting on the clutch release bearing, and permanent mechanical vibration damping means, the said means being placed between the clutch release bearing and the control block (23), in their shared contact zone, the control block (23) coming into contact solely with the damping means, **characterised in that** the permanent damping means are created by a coating (22) adhered to a support, the support being constituted either by the clutch release bearing or by the control block (23).

2. Device according to claim 1, **characterised in that** the vibration damping means are placed on the operating device.

3. Device according to claim 2, **characterised in that** the vibration damping means are placed on a metal strut (20) of the operating device.

4. Device according to claim 2, **characterised in that** the vibration damping means are placed on a zone (17) made of synthetic material of the operating device.

5. Device according to claim 2, **characterised in that** the vibration damping means are placed on clips (32) fitted onto the operating device.

6. Device according to claim 1, **characterised in that** the vibration damping means are placed on one face of a non-swivel ring (2) of the thrust bearing, the said face forming a bearing surface for the control block.

7. Device according to claim 1, **characterised in that** the vibration damping means are placed on the control block.

8. Device according to any one of the previous claims, **characterised in that** it comprises wear-resistant means placed between the clutch release bearing and the control block, in their shared contact zone.

9. Device according to any one of the previous claims, **characterised in that** the vibration damping means are in the form of a resilient coating (22).

10. Device according to claim 9, **characterised in that** the resilient coating comprises an organic resilient matrix and hard particles practically spherical in shape.

11. Device according to claim 10, **characterised in that** the elastic matrix is of elastomer type and that the particles are non-oxide, of ceramic type.

12. Device according to claim 10 or 11, **characterised in that** the diameter of the particles is mainly between 0.1 and 10 microns.
